Europäisches Patentamt

European Patent Office

Office européen des brevets

(11) Veröffentlichungsnummer : **0 181 631**
**B1**

(12) **EUROPÄISCHE PATENTSCHRIFT**

(45) Veröffentlichungstag der Patentschrift :
24.01.90

(51) Int. Cl.⁵ : **B 60 H   1/00**, F 16 H 19/08,
F 24 F 13/14, G 05 G   7/04

(21) Anmeldenummer : 85114357.8

(22) Anmeldetag : 12.11.85

(54) **Heiz- oder Klimaanlage für Kraftfahrzeuge.**

(30) Priorität : 15.11.84 DE 3441840

(43) Veröffentlichungstag der Anmeldung :
21.05.86 Patentblatt 86/21

(45) Bekanntmachung des Hinweises auf die Patenterteilung : 24.01.90 Patentblatt 90/04

(84) Benannte Vertragsstaaten :
DE FR GB IT SE

(56) Entgegenhaltungen :
EP—A— 0 097 876
DE—A—   910 509
GB—A— 1 234 933
US—A— 4 452 301

(73) Patentinhaber : Bayerische Motoren Werke Aktiengesellschaft
Patentabteilung AJ-3 Postfach 40 02 40 Petuelring 130
D-8000 München 40 (DE)

(72) Erfinder : Schramm, Horst, Dipl.-Ing.
Rathausstrasse 32
D-8047 Karlsfeld (DE)

(74) Vertreter : Schweiger, Erwin
c/o Bayerische Motoren Werke AG - AJ-35 Postfach
40 02 40 Petuelring 130
D-8000 München 40 (DE)

Jouve, 18, rue St-Denis, 75001 Paris, France

## Beschreibung

Die Erfindung bezieht sich auf eine Heiz- oder Klimaanlage für Kraftfahrzeuge mit durch eine Klappe verstellbaren Luftdurchtrittsöffnungen, deren Durchsatz zumindest annähernd linear mit dem Stellweg eines Stellglieds zusammenhängt.

Das Problem der Nicht-Linearität zwischen dem Stellweg des Stellglieds und dem Durchsatz ist seit langem bekannt. Zur Lösung diese Problems gibt es Ansätze, die darauf hinauslaufen, die Form der Klappe zu beeinflussen. Hier ist die DE-AS 25 04 475 zu nennen, bei der eine zweiteilige Klappe Verwendung findet. Die beiden Teile der Klappe sind über ein Scharnier beweglich miteinander verbunden. Beide Klappen sind um die Achse der einen Klappe verschwenkbar. Darüber hinaus ist die an dieser Klappe gelagerte zweite Klappe relativ hierzu verschwenkbar. Durch Vor- bzw. Nacheilen der zweiten Klappe gegenüber der ersten wird der lineare Zusammenhang annähernd erreicht. Nachteilig an der bekannten Ausführungsform ist der hohe Bauaufwand, da die Steuerung der zweiten Klappe in einer Entfernung von der Achse der ersten Klappe erfolgt, die gleich den Ausmaßen dieser Klappe entsprechen.

Der Erfindung liegt die Aufgabe zugrunde, eine Heiz- oder Klimaanlage der eingangs genannten Art zu schaffen, bei der der lineare Zusammenhang zwischen Stellung des Stellglieds und Durchzsatz auf konstruktiv einfache Weise erreicht ist.

Die Erfindung löst diese Aufgabe durch zwei kongruente, stets berührend aufeinander abrollende Ovalzahnräder im Übertragungsweg zwischen Stellglied und Klappe, von denen das eine Ovalzahnrad mit der Klappe und das andere Ovalzahnrad mit dem Stellglied gemeinsam gelagert ist.

Derartige Ovalräder sind bei Durchflußzählern bekannt. Ihre Bewegung weist bei gleichförmigem Durchfluß der Flüssigkeit periodische Ungleichförmigkeit auf. Im Rahmen der vorliegenden Erfindung wird gerade der umgekehrte Effekt verwendet. Eine entsprechend geartete Ungleichförmigkeit der Bewegung der Ovalräder, die durch ihre Bauform bedingt ist, führt zu einer linearität des Durchflusses im Verhältnis zum Stellweg des Stellglieds. Im Unterschied zum Stand der Technik kann dabei eine übliche einteilige Klappe zur Verstellung der Luftaustrittsöffnungen verwendet werden. Anstelle einer Ungleichförmigkeit im Endglied der Übertragungsstrecke zwischen Stellglied und Klappe, d. h. der Klappe selbst, ist nunmehr die Ungleichförmigkeit in den Übertragungsweg selbst verlegt.

Die Ausbildung der Ovalräder kann auf unterschiedliche Weise erfolgen. So können die Ovalräder als Ellipsen räder ausgebildet sein. Für besondere Anwendungsfälle, z. B. als Absperr-und Regulierklappe an Luftausttrittsöffnungen ist diese Ausführungsform zur feinfühligen Steuerung des Durchsatzes auch kleiner Mengen besonders vorteilhaft.

Schließlich kann eine weitere Verringerung des Bauvolumens dadurch erzielt werden, daß eines der Ovalräder in das Stellglied hinein verlegt ist.

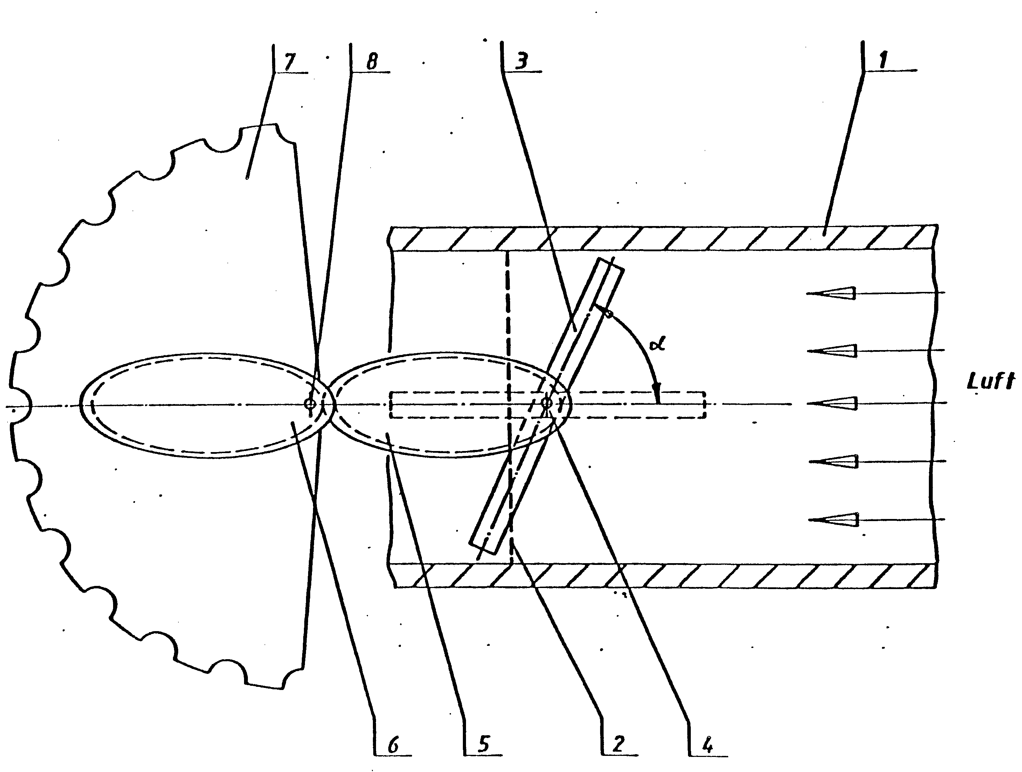

In der Zeichnung ist ein Ausführungsbeispiel der Erfindung dargestellt.

In einer Heiz- oder Klimaanlage ist in einem Luftführungskanal 1 im Bereich einer Luftdurchtrittsöffnung 2 eine Klappe 3 um eine Achse 4 schwenkbar gelagert. Mit der Klappe 3 ist ein Ellipsenrad (Ovalzahnrad) 5 verbunden, dessen Brennpunkt in der Achse 4 liegt. Das Ellipsenrad 5 greift in ein zweites Ellipsenrad (Ovalzahnrad) 6 ein, das in ein Stellglied 7 verlegt ist. Dieses ist um eine Achse 8 drehbar, in der gleichzeitig einer der Brennpunkte des Ellipsenrads 6 liegt.

Mit Hilfe des im Übertragungsweg zwischen Stellglied 7 und Klappe 3 liegenden paares von Ellipsenrädern 6 und 5 ist es möglich, den Durchsatz der Luft durch den Luftführungskanal 1 so zu steuern, daß sich ein linearer Zusammenhang zwischen dem Drehwinkel des Stellglieds 7 und diesem Durchsatz ergibt. Dabei wird durch die Ellipsenräder 5 und 6 eine Ungleichförmigkeit in der Übertragung erzielt. Dadurch ergibt sich, ausgehend von der dargestellten Ausgangslage, bei einer Winkeländerung des Stellglieds 7 um einen vorgegebenen Wert zunächst eine relativ geringe Änderung des Einstellwinkels $\alpha$ der Klappe 3. Bei größeren Drehwinkeln des Stellglieds 7 hat dann dieselbe Winkeländerung eine entsprechende größere Änderung des Einstellwinkels der Klappe 3 zur Folge. Bei entsprechender Dimensionierung der Ellipsenräder 5 und 6 ergibt sich damit der gewünschte lineare Zusammenhang zwischen dem Drehwinkel des Stellglieds 7 und dem Durchsatz durch den Luftführungskanal 1.

## Patentansprüche

1. Heiz- oder Klimaanlage für Kraftfahrzeuge mit einem durch eine Klappe (3) verstellbaren Luftführungskanal (1), dessen Durchsatz zumindest annähernd linear mit dem Stellweg eines Stellglieds (7) zusammenhängt, gekennzeichnet durch zwei kongruente aufeinander abrollende Ovalzahnräder (5, 6) im Übertragungsweg zwischen Stellglied (7) und Klappe (3), von denen das eine Ovalzahnrad (5) mit der Klappe (3) und das andere Ovalzahnrad (6) mit dem Stellglied (7) gemeinsam gelagert ist.

2. Heiz- oder Klimaanlage nach Anspruch 1, gekennzeichnet durch Ausbildung der Ovalzahnräder als Ellipsenzahnräder (5, 6).

3. Heiz- oder Klimaanlage nach Anspruch 1 oder 2, dadurch gekennzeichnet, daß eines (6) der Ovalzahnräder (5, 6) in das Stellglied (7) hinein verlegt ist.

## Claims

1. A heating or air-conditioning system for motor vehicles comprising an inner duct (1) adjustable by a valve (3) and having a flow rate which depends in at least approximately linear manner on the regulating distance of an actuator (7), characterised by two congruent oval gearwheels (5, 6) which roll on one another and are in the transmission path between the actuator (7) and the valve (3), one oval gearwheel (5) being mounted in common with the valve (3) and the other oval gearwheel (6) being mounted in common with the actuator (7).

2. A heating or air-conditioning system according to claim 1, characterised in that the oval gearwheels are constructed as elliptical gearwheels (5, 6).

3. A heating or air-conditioning system according to claim 1 or 2, characterised in that one (5) of the oval gearwheels (5, 6) is shifted into the actuator (7).

**Revendications**

1. Installation de chauffage ou de climatisation pour véhicule automobile, avec un canal (1) de guidage d'air réglable par un clapet (3), dont le débit d'air dépend au moins de façon à peu prés linéaire de la course d'un élément (7) de réglage, caractérisée en ce que deux roues dentées ovales (5, 6), congruentes et roulant l'une sur l'autre dans la zone de transmission entre l'élément (7) de réglage et le clapet (3), sont positionnées en commun, la roue dentée ovale (5) avec le clapet (3), et l'autre roue dentée ovale (6) avec l'élément (7) de réglage.

2. Installation de chauffage ou de climatisation selon la revendication 1, caractérisée en ce que les roues dentées ovales sont de la forme de roues dentées elliptiques (5, 6).

3. Installation de chauffage ou de climatisation selon les revendications 1 ou 2, caractérisée en ce que l'une (6) des roues dentées ovales (5, 6) est transférée dans l'élément (7) de réglage.